(19)

Europäisches
Patentamt
European
Patent Office
Office européen
des brevets

(11) **EP 2 400 783 A2**

(12) **EUROPEAN PATENT APPLICATION**

(43) Date of publication:
**28.12.2011 Bulletin 2011/52**

(51) Int Cl.:
***H04R 5/00*** *(2006.01)*

(21) Application number: **11182055.1**

(22) Date of filing: **26.08.2005**

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.08.2004 US 930659**

(62) Document number(s) of the earlier application(s) in accordance with Art. 76 EPC:
**05793022.4 / 1 790 195**

(71) Applicant: **DTS, Inc.**
**Calabasas, CA 91302 (US)**

(72) Inventor: **SMITH, William**
**Bangor, BT203TL (IE)**

(74) Representative: **South, Nicholas Geoffrey**
**A.A. Thornton & Co.**
**235 High Holborn**
**London WC1V 7LE (GB)**

Remarks:
This application was filed on 20.09.2011 as a divisional application to the application mentioned under INID code 62.

(54) **Method of mixing audio channels using correlated outputs**

(57) An audio mixer is provided that is effective at rebalancing the audio without introducing unwanted artifacts or overly softening the discrete presentation of the original audio. This is accomplished between any two or more input channels by processing the audio channels to generate one or more "correlated" audio signals for each pair of input channels. The in-phase correlated signal representing content in both channels that is the same or very similar with little or no phase or time delay is mixed with the input channels. The present approach may also generate an out-of-phase correlated signal (same or similar signals with appreciable time or phase delay) that is typically discarded and a pair of independent signals (signals not present in the other input channel) that may be mixed with the input channels. The provision of both the in-phase correlated signal and the pair of independent signals makes the present approach well suited for the downmixing of audio channels as well.

Fig. 2

**Description**

BACKGROUND OF THE INVENTION

Field of the Invention

This invention relates to mixing of audio signals and more specifically to a mix or downmix of two or more audio channels using a correlated output.

Description of the Related Art

Multi-channel audio has received enthusiastic acceptance by movie watchers in both traditional theater and home theater venues as it provides a true "surround sound" experience far superior to mixed stereo content. Dolby AC3 (Dolby digital) audio coding system is a world-wide standard for encoding stereo and 5.1 channel audio sound tracks. DTS Coherent Acoustics is another frequently used multi-channel audio coding system. DTS Coherent Acoustics is now being used to provide multi-channel music for special events and home listening via broadcast, CDs and DVDs 5.1, 6.1, 7.1, 10.2 and other multi-channel formats

Car audio systems have over the years advanced from mono to stereo to the multi-speaker systems standard in most every automobile today. However, most content is still provided in a 2-channel stereo (L,R) format. The audio system mixes and delays the two channels to the multi-speaker lay out to provide an enhanced audio experience. However with the growing availability of multi-channel music, multi-channel audio systems are being implemented in automobiles to provide passengers with a "surround sound" experience.

Although a significant improvement over existing audio systems, the confines of the car and proximity of passengers to particular speakers affect the surround-sound experience. In general, the desired mix embodied in the multi-channel format may become "unbalanced". For example, a passenger sitting in the front passenger's seat may here too much of the discrete R channel that is emanating from the front right speaker effectively losing some of the benefits of the surround sound presentation. Even more extreme, a passenger in the back seat may here only the surround sound channels.

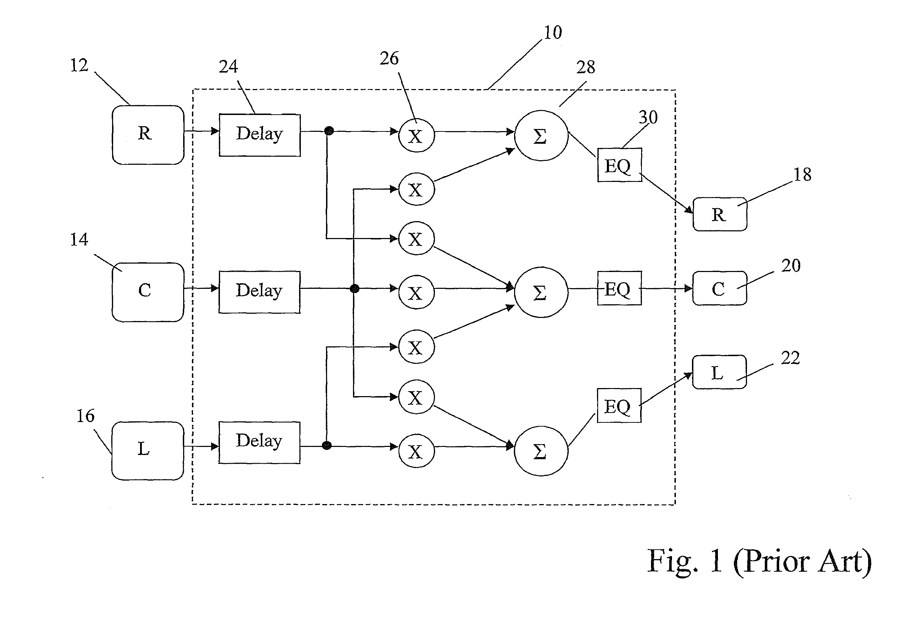

As a result, automakers have found that some amount of remixing of the discrete channels can reestablish the desired balance and improve the surround sound experience for everyone in the car. As shown in Figure 1, a typical mixer **10** remixes the discrete R,C,L input channels **12,14,16** into R,C,L output channels **18,20,22** for an automobile. Each channel is passed through a delay **24** and mixed (multiplied by gain coefficients Gi **26** and summed **28**) with the adjacent channels. Standard mixing equations are:

$$R = G1*R + G2*C$$

$$C = G3*C + G4*L + G5*R, \text{ and}$$

$$L = G6*L + G7*C.$$

The mixed channels are passed through equalizers **30** to the output channels **18,20,22** for playback on the L,C,R channel speakers in the automobile.

Although this approach is generally effective at rebalancing the audio to provide a reasonable surround-sound experience for every passenger in the automobile there are a few potential problems. This approach may introduce unwanted artifacts when two channels include the same or very similar content but with a relative time or phase delay. Furthermore, this approach may over mix the signals that were assigned to a specific channel thereby degrading the "discreteness" of the multi-channel audio.

SUMMARY OF THE INVENTION

The present invention provides a method of mixing audio channels that is effective at rebalancing the audio or downmixing audio channels without introducing unwanted artifacts or overly degrading the discrete presentation of the original audio.

This is accomplished between any two or more input channels by processing the audio channels to generate one or more "correlated" audio signals for each pair of input channels. The correlated audio signal(s) are then mixed with the input audio channels to provide the output channels. The correlator can be implemented using any suitable technology including but not limited to Neural Networks, Independent Component Analysis (ICA), Adaptive Filtering or Matrix Decoders.

In one embodiment, only the in-phase correlated signal is mixed with the two input channels. The in-phase correlated signal represents the same or very similar signals that are present in both channels and in-phase (no or minimal time delay). By mixing only this portion of the audio signals we are able to achieve the desired rebalancing without introducing unwanted artifacts or degrading the discreteness of multi-channel audio.

In another embodiment, the correlation process provides the in-phase correlated signal, an out-of-phase correlated signal (same or similar signals with appreciable time or phase delay) and one or more independent signals (signals not present in the other input channel) that are mixed with the input channels. This approach provides more mixing flexibility. The mixer may set the mixing coefficients of the out-of-phase and independent signals to zero thereby achieving the same results as if only the in-phase correlated signal were mixed. Or the mixer may simply lower the coefficients in these signals to provide a smoother mix. In other applications, the mixer may want to reduce or remove the out-of-phase signal but retain some of the independent signal. For example, in a 3:2 downmix from L,C,R input channels to L,R output channels it may be desirable to mix the independent C channel signals into the L and R output channels.

These and other features and advantages of the invention will be apparent to those skilled in the art from the following detailed description of preferred embodiments, taken together with the accompanying drawings, in which:

## BRIEF DESCRIPTION OF THE DRAWINGS

FIG. 1, as described above, is a known configuration for mixing the discrete L, C and R audio channels in an automobile to improve the surround-sound experience;

FIG. 2 is a configuration for mixing the discrete L, C and R audio channels using the correlated outputs between the L and C and R and C channels in accordance with the present invention;

FIG. 3 is a block diagram of a correlator generating a correlated output;

Fig. 4 is a block diagram of a correlator generating correlated, out-of-phase and independent outputs;

FIGs. 5a through 5h are simplified diagrams showing time and frequency domain representations of the L and R input channels and frequency domain representations of 2:1 and 4:1 correlated outputs;

FIG. 6 is a block diagram of an embodiment of the correlator using a 2:4 matrix decoder;

FIG. 7 is a simplified block diagram of an automobile audio system;

FIG. 8 is a block diagram of the multi-channel mixer; and

FIG. 9 is a block diagram of the multi-channel mixer that exploits the downmix capabilities of the correlator shown in FIG. 4 in an automobile.

## DETAILED DESCRIPTION OF THE INVENTION

The application of multi-channel audio to automobiles revealed the desirability for remixing of the discrete audio channels to provide a more uniform surround sound experience for all passengers. However, although a straightforward mix was effective at rebalancing the multi-channel audio this approach could produce unwanted artifacts. If, for example, the R and C channels included the same or very similar content with appreciable phase or time delays, remixing these two channels could produce phase distortion and/or amplitude distortion. Furthermore, much of the desirability of multi-channel audio stems from the discrete unmixed presentation of the audio channels. The remixing process may soften the discrete presentation of the audio.

Therefore, the present invention provides a method of mixing audio channels that is effective at rebalancing the audio without introducing unwanted artifacts or overly softening the discrete presentation of the original audio. This is accomplished between any two or more input channels by processing the audio channels to generate one or more "correlated" audio signals for each pair of input channels. The in-phase correlated signal representing content in both channels that is the same or very similar with little or no phase or time delay is mixed with the input channels. The present approach may also generate an out-of-phase correlated signal (same or similar signals with appreciable time or phase delay) that is typically discarded and a pair of independent signals (signals not present in the other input channel) that may be mixed with the input channels. The provision of both the in-phase correlated signal and the pair of independent signals makes the present approach well suited for the downmixing of audio channels as well.

Although the techniques were developed in the context of improving the surround sound experience provided by multi-channel audio in a automobile, the present invention is generally applicable to any two or more audio channels in which mixing occurs in any setting.

**Mixing with Correlated Outputs**

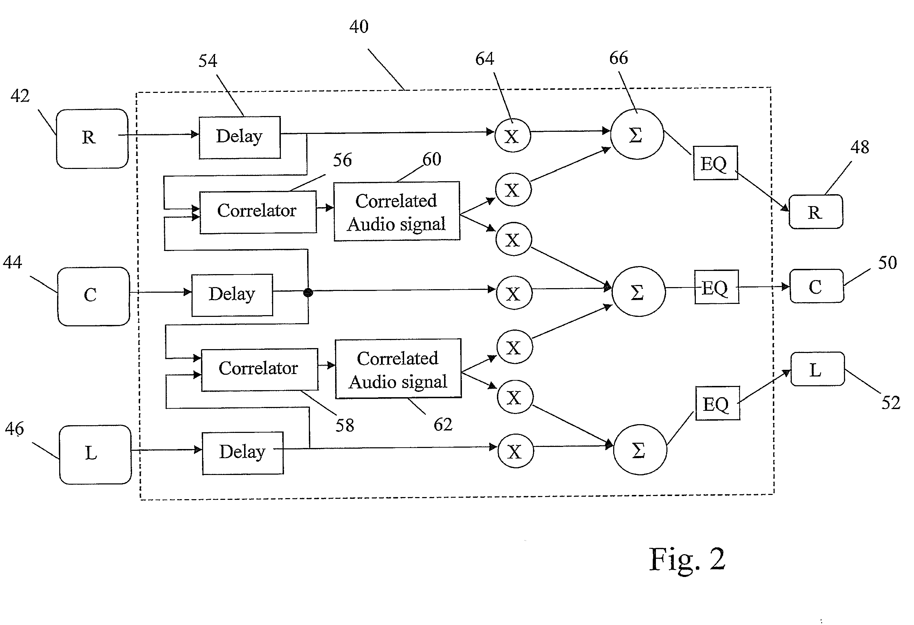

As shown in Figure 2, a mixer **40** remixes the discrete R,C,L input channels **42,44,46** into R,C,L output channels **48,50,52** for an automobile. Each channel is passed through a delay **54.** The R and C and L and C channels are input to correlators **56** and **58,** respectively, which generate correlated audio signals **60** and **62.** These correlated audio signals **60** and **62** are mixed (multiplied by gain coefficients Gi **64** and summed **66**) with the adjacent channels. The mixed channels are passed through equalizers **68** to the output channels **48,50,52** for playback on the L,C,R channel speakers in, for example, the automobile.

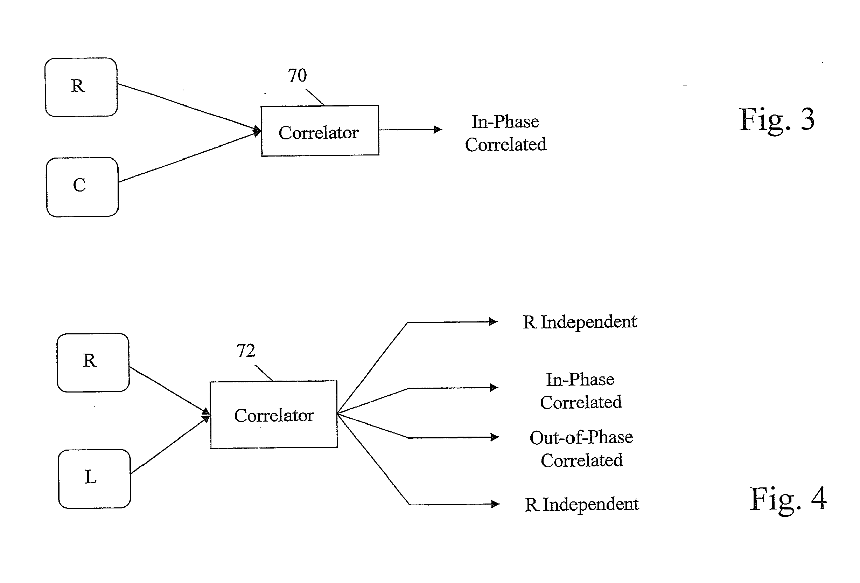

The correlators **56** and **58** can be implemented using any suitable technology including but not limited to Neural Networks, Independent Component Analysis (ICA), Adaptive Filtering or Matrix Decoders. As shown in Figure 3, a correlator **70** can be configured to produce a single in-phase correlated audio signal (LCC, RCC) that is mixed as follows:

$$R = G8*R + G9*RCC \qquad\qquad (1)$$

$$C = G10*C + G11*LCC + G12*RCC, \text{ and} \qquad (2)$$

$$L = G13*L + G14*LCC. \qquad\qquad (3)$$

In this approach, the out-of-phase correlated signals and independent signals are removed. Of course there are no bright lines or clear definitions that separate in-phase from out-of-phase and correlated from independent. How these components of the audio content are separated will depend upon the technology used to implement the correlator and the desired characteristics of the correlated signal. In some applications it may be desirable to retain only very high correlated signals. In other applications, it may be desirable to retain some of the out-of-phase and independent signals.

As shown in Figure 4, this desire for increased flexibility can be accommodated with a correlator **72** that is configured to produce an in-phase correlated audio signal (RIP,LIP), an out-of-phase correlated audio signal (ROP, LOP) and L and R independent audio signals(RCI,CRI and LCI,CLI). In general, each of these components can be mixed in accordance with mixing equations:

$$R = G15*R + (G16*RIP + G17*ROP + G18*RCI + G19*CRI) \quad (4)$$

$$C = G20*C + (G21*LIP + G22*LOP + G23*LCI + G24*CLI)+$$
$$(G25*RIP + G26*ROP + G27*RCI + G28*CRI), \text{ and} \qquad (5)$$

$$L = G29*L + (G30*LIP + G31*LOP + G32*LCI + G33*CLI). (6)$$

Similar to above how these different correlated components are computed will depend upon the implementing technology and the desired characteristics of the different components.

In a typical implementation, the out of phase components and the independent components for that output channel may be discarded. In this case the equations simplify to:

$$R = G15*R + (G16*RIP + G19*CRI) \qquad\qquad (7)$$

$$C = G20*C + (G21*LIP + G23*LCI) + (G25*RIP + G27*RCI), \text{ and} \qquad\qquad (8)$$

$$L = G29*L + (G30*LIP + G33*CLI) \qquad\qquad (9)$$

leaving only the in-phase correlated signals and the independent signals from the other channel.

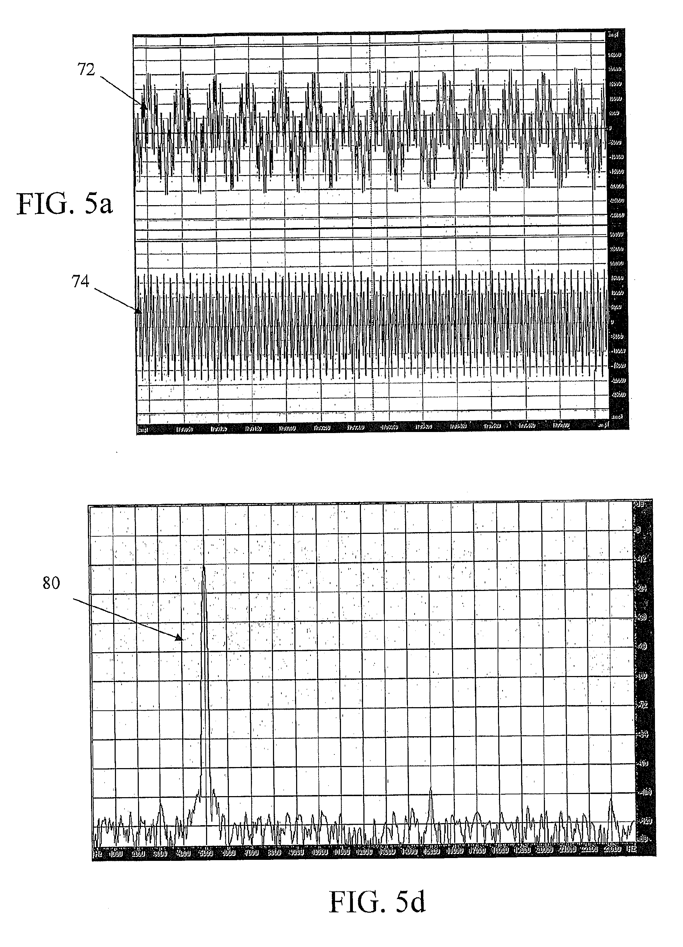

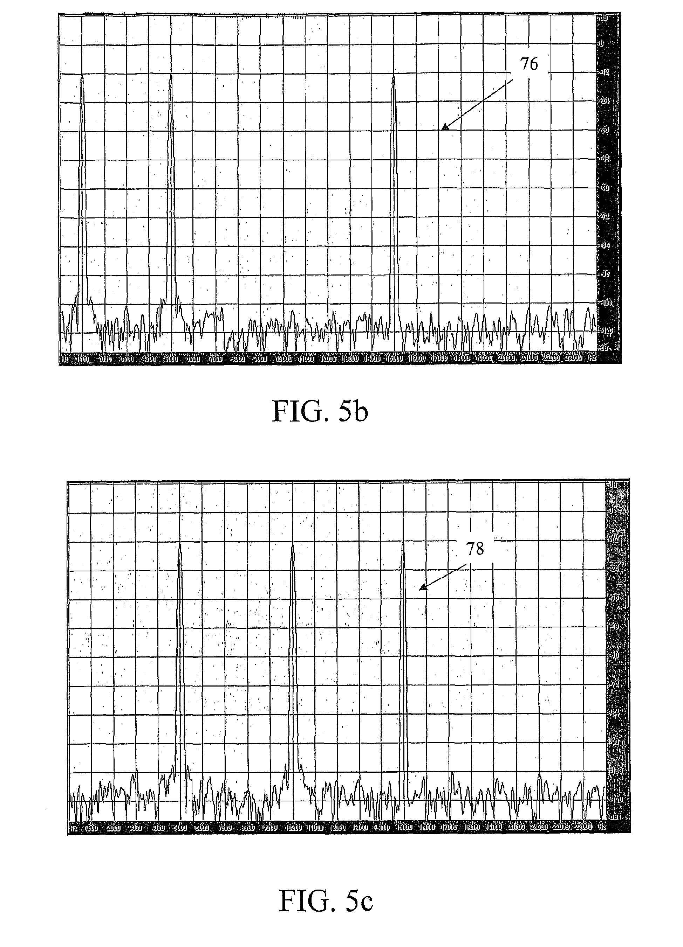

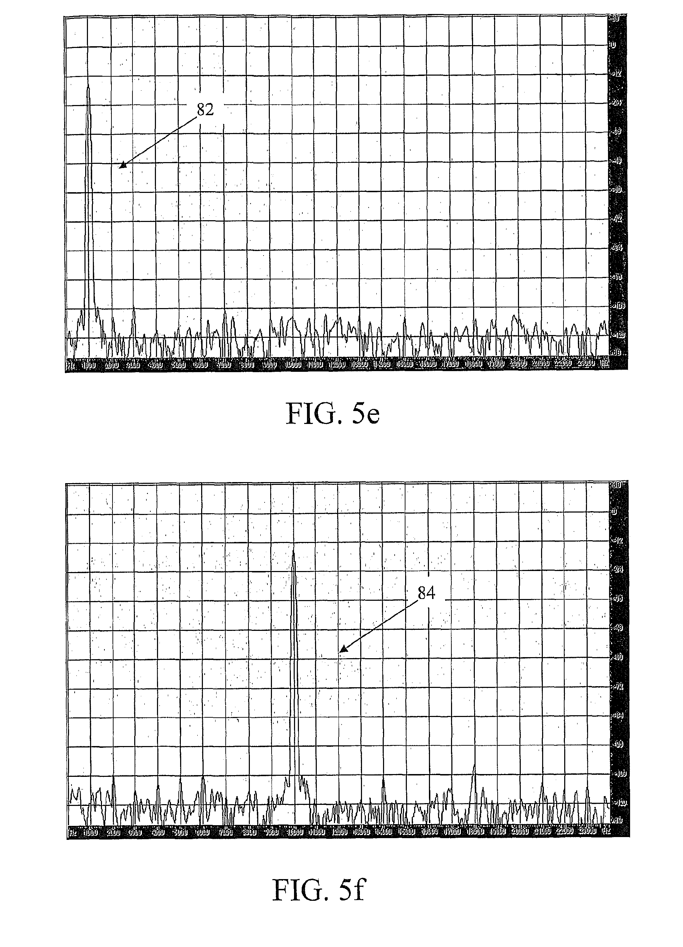

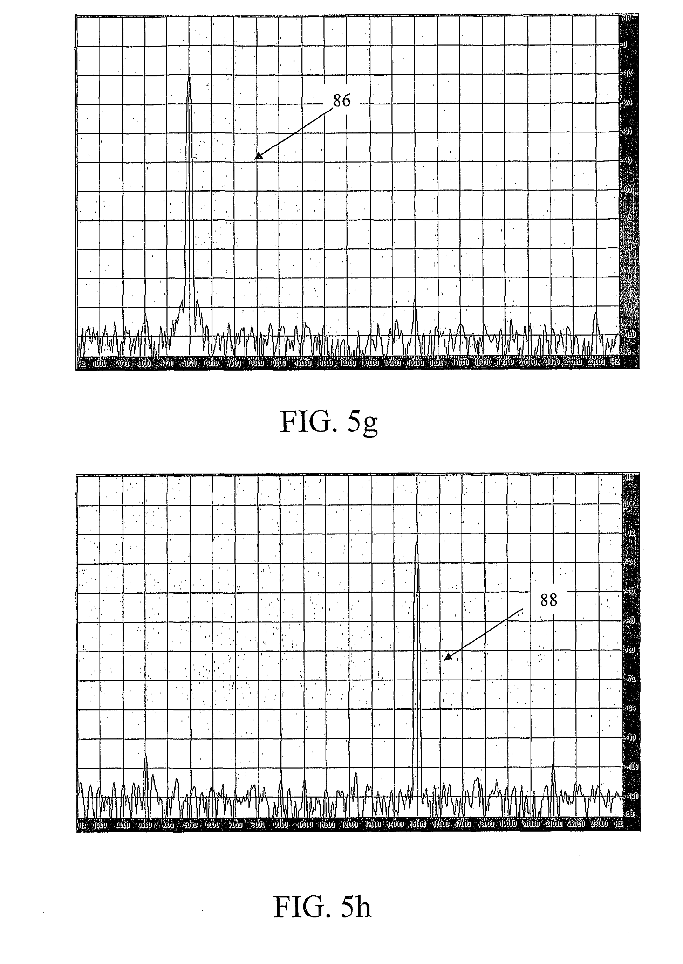

Figures 5a through 5h illustrate a simple four tone example highlighting the benefits and flexibility provided by mixing correlated outputs. In this example, the L channel includes a 1kHz tone, a 5kHz tone and a 15kHz tone. The R channel has a 5 kHz tone, a 10 kHz tone and a 15 kHz tone. The 5 kHz tones are in phase and correlated. The 15 kHz tones are out of phase. The time domain waveforms **72** and **74** for the L (top) and R (bottom) channels are shown in Figure 5a. The frequency content **76** and **78** of the L and R channels are shown in Figures 5b and 5c, respectively.

A 2:1 correlator of the type illustrated in Figure 3 above, produces a single in-phase correlated audio signal **80** as shown in Figure 5d. This signal can then be mixed with either or both the left and right channels to rebalance the 5kHz tone without introducing any phase or amplitude distortions associated with the out-of-phase 15 kHz tones or mixing in any of the independent audio signals, 1kHz into the R channel or 10kHz in the L channel.

A 2:4 correlator of the type illustrated in Figure 4 above, produces an independent L signal **82** at 1kHz, independent R signal **84** at 10kHz, in-phase correlated signal **86** at 5kHz, and an out-of-phase correlated signal **88** at 15kHz as shown in Figure 5e-5h. These signals can then be independently mixed with either or both the left and right channels. In some cases only the in-phase correlate signal **86** will be mixed and the other discarded or set to zero. Alternately, the mixer may prefer to add a small component of these other signals. For example, in a 3:2 downmix in which the C channel does not have a discrete speaker, it may be necessary to mix some of the independent signals.

**Correlator Implementations**

Matrix Decoder

As mentioned above, the correlator may be implemented using a matrix decoder. The earliest multi-channel systems matrix encoded multiple audio channels, e.g. left, right, center and surround (L,R,C,S) channels, into left and right total (Lt,Rt) channels and recorded them in the standard stereo format. The Prologic encoder 4 matrix encodes this mix as follows:

$$Lt = L + .707C + S(+90°), \text{ and} \qquad (10)$$

$$Rt = R + .707C + S(-90), \qquad (11)$$

A matrix decoder decodes the two discrete channels Lt,Rt and expands them into four discrete reconstructed channels L,R,C and S that are amplified and distributed to a five speaker system. Many different proprietary algorithms are used to perform an active decode and all are based on measuring the power of Lt+Rt (C), Lt-Rt (S), Lt (L) and Rt (R) to calculate gain factors Hi whereby,

$$L = H1*Lt + H2*Rt \qquad (12)$$

$$R = H3*Lt + H4*Rt \qquad (13)$$

$$C = H5*Lt + H6*Rt, \text{ and} \qquad (14)$$

$$S = H7*Lt + H8*Rt. \qquad (15)$$

More specifically, Dolby Pro Logic provides a set of gain factors for a null point at the center of a five-point sound field. The Pro Logic decoder measures the absolute power of the two-channel matrix encoded signals Lt and Rt and calculates power levels for each of the L, R, C and S channels. These power levels are then used to calculate L/R and C/S dominance vectors whose vector sum defines a single dominance vector in the five-point sound field from which the single dominant signal should emanate. The power levels and dominance vectors are time averaged to improve stability. The decoder scales the set of gain coefficients at the null point according to the dominance vectors to provide gain factors Hi.

DTS Neo:6 decoder includes a multiband filter bank, a matrix decoder and a synthesis filter, which together decode Lt and Rt and reconstruct the multi-channel output. Neo:6 computes L/R and C/S dominance vector for *each*

*subband* and averages them using both a slow and fast average. Neo:6 uses the dominance vector to map the Lt, Rt subband signals into an expanded 9-point sound field. Neo:6 computes gain coefficients for the vector in each subband based on the values of the gain coefficients in the sound field. This allows the subbands to be steered independently in a sound field that observes the motion picture channel configuration.

Matrix Decoder as a Correlator

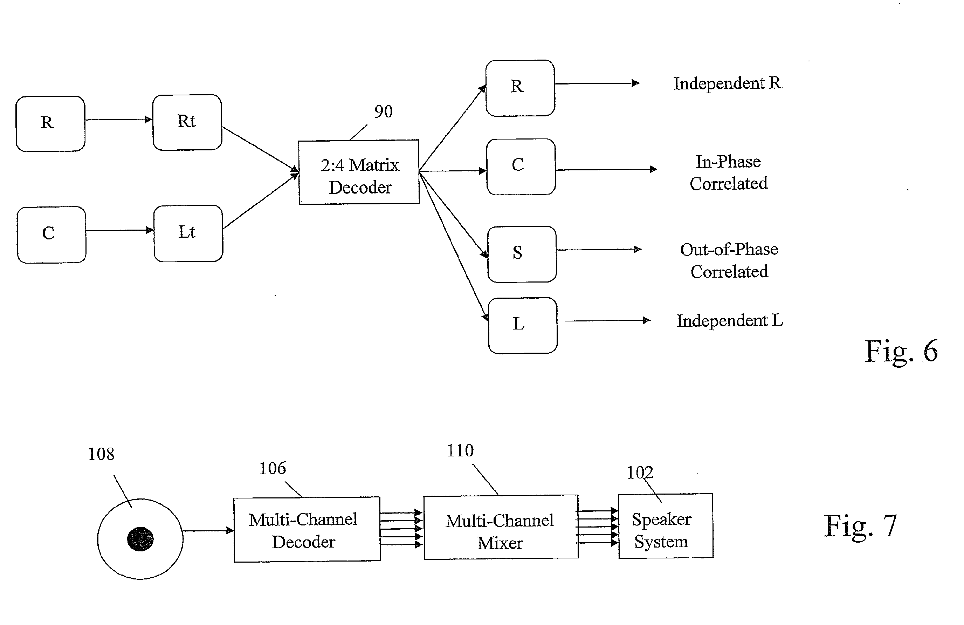

As shown in Figure 6, a 2:4 matrix decoder **90** is designed to deconstruct Lt and Rt to reconstruct the L, R, C and S channels as encoded in equations 10 and 11. An analysis of these equations shows that the L and R channels are independent in Lt and Rt, the C channel is perfectly correlated and the S channel is 180° out-of-phase.

Therefore, as shown in Figure 6, if Lt and Rt are simply two audio channels, and not matrix encoded channels, then the reconstructed C channel will represent any in-phase correlated audio signals in Lt and Rt, the reconstructed S channel will represent any out-of-phase correlated audio signals and the reconstructed L and R channels will represent independent audio signals from the two input audio channels. Note, a 2:3 matrix decoder in which the S channel is mixed into the L and R channels can be used if only the in-phase correlated signal is required.

The specific algorithm used to calculate the gain factors Hi will determine the degree of correlation, phase shift or independence captured in each of these channels. To illustrate, consider the following idealized cases:

Case 1: Lt, Rt highly correlated (Lt = Rt)

| | | |
|---|---|---|
| L H1 and H2 = | 0.354, | -0.354, |
| C H1 and H2 = | 0.707, | 0.707, |
| R H1 and H2 = | -0.354, | 0.354, |
| S H1 and H2 = | 0.707, | -0.707, |

In this case, L, R and S will be 0 and C will contain equal amounts of both L and R. As expected, in-phase contribution will be large and the other components will be zero.. Depending on where the steering vector ends up new coefficients are calculated from a grid of optimal ones using interpolation

Case 2: Lt, Rt complete out of phase (Lt = -1.0*Rt)

| | | |
|---|---|---|
| L G1 and G2 = | 0.354, | 0.354, |
| C G1 and G2 = | 0.5, | 0.5, |
| R G1 and G2 = | 0.354, | 0.354, |
| S H1 and H2 = | 0.707, | -0.707, |

In this case, all of the outputs will be zero.

Case 3: Lt is dominate (Rt = 0)

| | | |
|---|---|---|
| L H1 and H2 = | 1.0, | 0.0, |
| C H1 and H2 = | 0.0, | 0.5, |
| R H1 and H2 = | 0.0, | 0.707, |
| S H1 and H2 = | 0.0, | -1, |

In this case, all of the outputs are zero except for the left channel which contains the left input.

**Multi-Channel Automotive Audio System**

As discussed above the motivation for the present invention was to improve the surround sound experience provided by multi-channel audio such as provided by Dolby AC3 or DTS Coherent Acoustics. By mixing correlated audio signals, the multi-channel mixer provides the desired rebalanced of the multi-channel audio without producing unwanted artifacts or softening the discrete presentation of the audio.

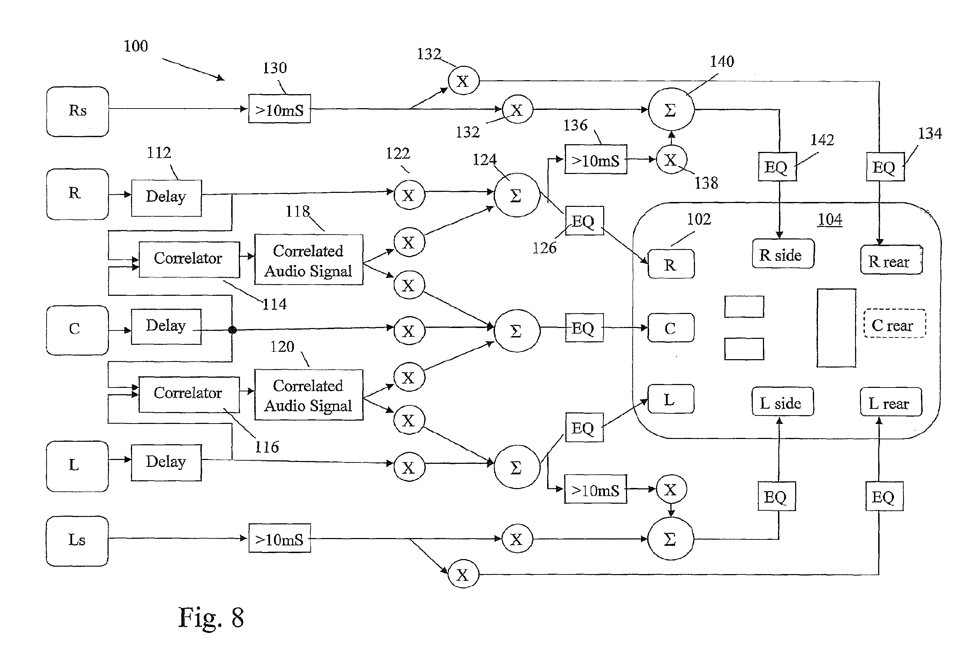

As shown in Figures 7 and 8, a typical automotive sound system **100** a plurality of speakers **102** including at least L front and R front in the passenger cabin **104** of the car. In this example, speaker system also includes C front, R and L side and R and L rear and may include a C rear. A multi-channel decoder **106** decodes multi-channel encoded audio from a disk **108** (or broadcast) into multiple discrete audio input channels including at least L front, C front and R front. In this 5.1 channel format right Rs and left Ls surround channels are also provided. The .1 or low frequency channel is not shown.

A multi-channel mixer **110** mixes the discrete R,C,L channels using correlated outputs into the R,C,L channels for the respective speakers. Each channel is passed through a delay **112.** The R and C and L and C channels are input to correlators **114** and **116,** respectively, which generate correlated audio signals **118** and **120.** These correlated audio signals **118** and **120** are mixed (multiplied by gain coefficients Gi **122** and summed **124)** with the adjacent channels. The mixed channels are passed through equalizers **126** to the R,C, L output channels for playback on the R,C,L channel speakers.

In this particular application 5.1 audio is being mixed into a 7 speaker system, which is not uncommon. Because of typical home speaker configurations, 5.1 content is more common but many cars use 7 speaker systems. In this case the Rs and Ls discrete channels are mixed to the R side and R read and L side and L rear, respectively. The Rs (Ls) channel is passed through a delay **130,** split and multiplied by mixing coefficients **132.** One branch is passed through an equalizer **134** and provided to the R read (L rear). The other branch is mixed with the mixed R (L) channel (delay **136,** mixing coefficient **138,** and summing node **1.40),** passed through an equalizer **142** and provided to the R side (L side).

If the content were provided in a 7.1 format, the R, R side and R rear discrete audio channels could be mixed using correlated outputs in a manner similar to that described for the R,C,L. The left side channels could be similarly mixed. Furthermore, if the audio was available in an 8.1 format and the speaker system included a C rear speaker, all of the rear speakers could be so mixed.

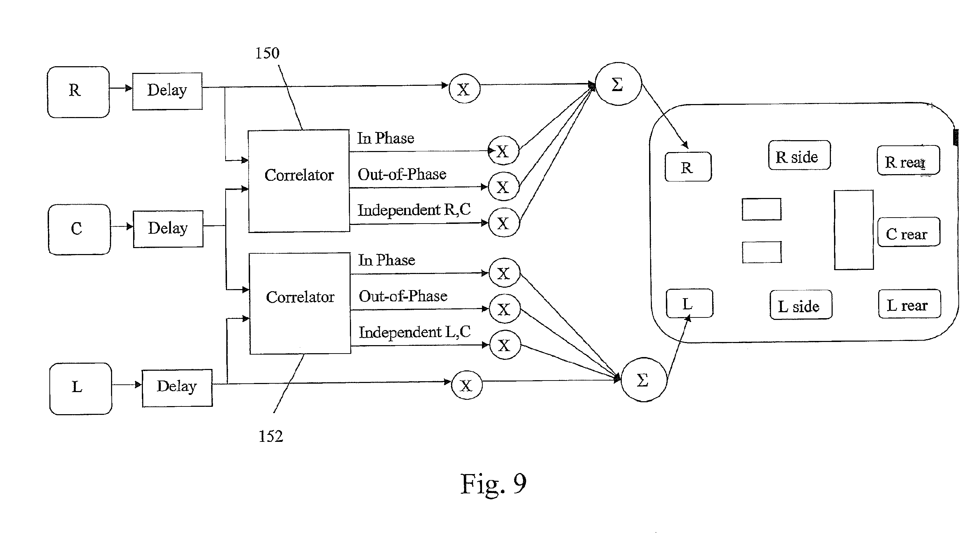

As shown in Figure 9, the speaker system in the car is not provided with a C front speaker. The 3 front channels (R,C,L) must be downmixed into only 2 channels (R,L). This is a common occurrence in non-automotive applications where the C channel speaker does not exist. The C channel is simply mixed into both the L and R speakers. In the automotive setting, the same approach can be taken. However, the ideal coefficients for mixing the C channel may not be the same as the desired coefficients for rebalancing and further may create unwanted artifacts do to the out-of-phase correlated signals between the input channels.

Instead, the correlators **150** and **152** generate the in-phase, out-of-phase, and pair of independent audio signals. The mixer now has the flexibility to mix the in-phase components as needed to rebalance the signal, discard the out-of-phase components to avoid phase distortion and mix the independent C channel to preserve the audio signals in that channel.

The capability to flexibly downmix N channels into M where N>M in this manner will have applicability outside automotive applications. For example, content is being generated for new exhibition venues with more discrete channels, e.g. 10.2. However, many of the commercial and consumer venues will have 5.1, 6.1 or 7.1 speaker configurations that will require downmixing.

While several illustrative embodiments of the invention have been shown and described, numerous variations and alternate embodiments will occur to those skilled in the art. Such variations and alternate embodiments are contemplated, and can be made without departing from the spirit and scope of the invention as defined in the appended claims.

An audio mixer according to the present invention is defined in appended claim 1. Further preferred features thereof are claimed in subclaims 2 and 3. In addition to the claimed embodiment in the appended claims, the following is a list of additional embodiments, which may serve as the basis for additional claims in this application or subsequent divisional applications:

Embodiment 1

A method of mixing audio channels, comprising:

providing first and second audio input channels;
correlating the first and second audio input channels to provide an in-phase correlated audio signal between the first and second audio input channels;
multiplying the in-phase correlated audio signal by a first gain coefficient; and

mixing the in-phase correlated audio signal with the first audio input channel into a first audio output channel.

Embodiment 2

The method of embodiment 1, wherein the first and second audio input channels are correlated in a plurality of subbands to provide a like plurality of in-phase correlated audio signals in the respective subbands, each subband having its own first gain coefficient.

Embodiment 3

The method of embodiment 1, wherein the in-phase correlated signal represents the same or similar audio signals with little or no time or phase delay in the first and second audio input channels.

Embodiment 4

The method of embodiment 2, wherein correlating the first and second audio input channels further provides a separate independent signal representing audio signals present in the second input audio channel but not present in the first input audio channel, further comprising:

multiplying the independent signal by a second gain coefficient; and
mixing the independent and in-phase correlated audio signals with the first audio input channel into the first audio output channel.

Embodiment 5

The method of embodiment 4, wherein the first and second audio input channels are correlated in a plurality of subbands to provide a like plurality of in-phase correlated audio signals and first independent signals in the respective subbands, each subband having its own first gain coefficient.

Embodiment 6

The method of embodiment 4, wherein correlating the first and second audio input channels further provides a separate out-of-phase correlated signal.

Embodiment 7

The method of embodiment 1, wherein the correlation is performed using one of neural networks, ICA, adaptive prediction or matrix decoding.

Embodiment 8

The method of embodiment 7, wherein the out-of-phase correlated signal is discarded.

Embodiment 9

The method of embodiment 1, wherein the correlation of the first and second input channels is performed with a 2:3 matrix decoding to produce the in-phase correlated audio signal and separate first and second matrix signals that include independent audio signals for the first and second input channels, respectively, and out-of-phase correlated signals, wherein said in-phase audio signal is multiplied by the first gain coefficient and mixed with said first input channel and said separate first and second matrix signals are discarded.

Embodiment 10

The method of embodiment 1, wherein the correlation of the first and second input channels is performed by a 2:4 matrix decoding to produce the in-phase correlated signal, a separate out-of-phase correlated signal and separate first and second independent signals, further comprising:

multiplying the first and second independent signals and said out-of-phase correlated signal by second, third and fourth gain coefficient, respectively; and
mixing the first and second independent audio signals and out-of-phase correlated signal with the first audio input channel into the first audio output channel.

Embodiment 11

The method of embodiment 1, wherein said first and second input channels are discrete channels of a multi-channel discrete audio signal.

Embodiment 12

The method of embodiment 11, wherein the fourth gain coefficient is set to zero to discard said out-of-phase signal.

Embodiment 13

A method of mixing audio channels, comprising:

providing right (R), center (C) and left (L) audio input channels;
correlating the R and C audio channels to provide a C-R in-phase correlated audio signal between the R and C channels and a C-R independent audio signal representing audio signals present in the C audio input channel but not present in the R audio input channel in respective audio channels;
correlating the C and L audio channels to provide a C-L in-phase correlated audio signal between the L and C channels and a C-L independent audio signal representing audio signals present in the C audio input channel but not present in the L audio input channel in respective audio channels;
multiplying the C-R in-phase correlated and C-R independent audio signals by respective gain coefficients and mixing them with the R input channel into a R output channel; and
multiplying the C-L in-phase correlated and C-L independent audio signals by respective gain coefficients and mixing them with the L input channel into a L output channel.

Embodiment 14

The method of embodiment 13, wherein correlating the R and C audio input channels further provides a C-R out-of-phase correlated signal in an audio channel and correlating the L and C audio input channels further provides a C-L out-of-phase correlated signal in an audio channel, further comprising:

multiplying the C-R out-of-phase correlated signal by a negative gain coefficient to bring it in-phase and mixing it with the R audio input channel into the R output channel; and
multiplying the C-L out-of-phase correlated signal by a negative gain coefficient to bring it in-phase and mixing it with the L audio input channel into the L output channel.

Embodiment 15

The method of embodiment 14, wherein R and C and C and L input channels are correlated in a plurality of subbands to provide a like plurality of first and second in-phase correlated audio signals in the respective subbands, each subband having its own gain coefficient.

Embodiment 16

The method of embodiment 14, wherein correlating the R and C and L and C audio input channels further provides R-C and L-C independent signals that represent audio signals present in the R and L channels but not the C channel in respective audio channels further comprising:

multiplying the C-R and C-L in-phase correlated audio signals and the R-C and L-C independent signals by respective gain coefficients and mixing them with the C input channel into a C output channel.

Embodiment 17

A method of mixing audio channels, comprising:

providing first, second and third audio input channels;
processing the first and second channels to provide a first in-phase correlated signal, a first out-of-phase correlated signal, and first and second independent signals;
processing the second and third channels to provide a second in-phase correlated signal, a second out-of-phase correlated signal, and second and third independent signals;
mixing the first in-phase correlated signal, a first out-of-phase correlated signal, and the first and second independent signals with the first input channel into a first output channel; and
mixing the second in-phase correlated signal, a second out-of-phase correlated signal, and the second and third independent signals with the third input channel into a third output channel.

Embodiment 18

The method of embodiment 17, wherein the first and second out-of-phase correlated signals are discarded.

Embodiment 19

The method of embodiment 17, wherein said first and second channels and said second and third channels are each 2:4 matrix decoded to produce the signals.

Embodiment 20

An audio mixer, comprising:

a correlator that correlates first and second audio' input channels to provide an in-phase correlated audio signal between the first and second audio input channels; and
a mixer that multiplies the in-phase correlated audio signal by a gain coefficient and mixes it with the first input channel into a first output channel.

Embodiment 21

The audio mixer of embodiment 20, wherein the first and second audio input channels are correlated in a plurality of subbands to provide a like plurality of in-phase correlated audio signals in the respective subbands, each subband having its own gain coefficient.

Embodiment 22

The audio mixer of embodiment 20, wherein the correlator further provides a separate independent signal representing audio signals present in said second audio input channel but not the first audio input channel, said mixer multiplying the independent signal by a gain coefficient and mixing it with the first input channel into the first output channel.

Embodiment 23

An audio system, comprising:

an automobile having a passenger cabin;
a plurality of speakers including at least L front and R front in the passenger cabin;
a multi-channel decoder for decoding multi-channel encoded audio into multiple discrete audio input channels including at least L front, C front and R front; and
a multi-channel mixer that

correlates the R and C audio channels and C and L audio channels to provide C-R and C-L in-phase correlated audio signals and C-R and C-L independent audio signals representing audio signals in the C audio input channel not present in the R and L channels, respectively;
multiplies the - C-R in-phase correlated audio signal and C-R independent audio signal by respective gain coefficients and mixes them with the R input channel into a R output channel that is directed to the R front speaker; and

multiplies the C-L in-phase correlated audio signal and C-L independent audio signal by respective gain coefficients and mixes them with the L input channel into a L output channel that is directed to the L front speaker.

Embodiment 24

The audio system of embodiment 23, wherein the R and C and C and L audio channels are correlated in a plurality of subbands to provide a like plurality of first and second in-phase correlated audio signals in the respective subbands, each subband having its own gain coefficient.

Embodiment 25

The audio system of embodiment 24, wherein correlating the R and C 15 audio channels and C and L audio channels further provides C-R and C-L out-of-phase correlated signals that are inverted and multiplied by respective gain coefficients to bring them in-phase and mixed with the R and L input audio channels, respectively.

Embodiment 26

The audio system of embodiment 23, wherein correlating the R and C audio channels and C and L audio channels further provides R-C and L-C independent signals including audio signals present in the R and L audio channels but not present in the C audio channel, respectively, said mixer multiplying the C-R and C-L in-phase correlated signals and R-C and L-C independent signals by respective gain coefficients and mixing them with the C input channel into a C output channel that is directed to a C front speaker.

**Claims**

1. An audio mixer, comprising:

   a decoder that receives multi-channel encoded audio data and outputs multiple discrete audio input channels including at least left (L), center (C) and right (R) channels,
   a first matrix decoder that matrix decodes the R and C channels to produce a first in-phase correlated audio signal;
   a first mixer that mixes the first in-phase correlated audio signal with the R input channel into a R output channel;
   a second matrix decoder that matrix decodes the L and C channels to produce a second in-phase correlated audio signal; and
   a second mixer that mixes the second in-phase correlated audio signal with the L input channel into a L output channel.

2. The audio mixer of claim 1, wherein said first and second matrix decoders comprise 2:3 decoders that output left and right channels that are discarded and a center channel that provides the in-phase correlated audio signal.

3. The audio mixer of claim 1, wherein said first and second matrix decoders comprise 2:4 decoders that output left and right channels that provide R and C and L and C independent audio signals, respectively, output a center channel that provides the in-phase correlated audio signal, and output a surround channel that provides an out-of-phase correlated audio signal that is discarded.

Fig. 1 (Prior Art)

EP 2 400 783 A2

Fig. 2

EP 2 400 783 A2

R

C

70

Correlator

In-Phase
Correlated

Fig. 3

R

L

72

Correlator

R Independent

In-Phase
Correlated

Out-of-Phase
Correlated

R Independent

Fig. 4

FIG. 5a

FIG. 5d

FIG. 5b

FIG. 5c

FIG. 5e

FIG. 5f

FIG. 5g

FIG. 5h

EP 2 400 783 A2

R → Rt

C → Lt

90

Rt, Lt → 2:4 Matrix Decoder

R → Independent R

C → In-Phase Correlated

S → Out-of-Phase Correlated

L → Independent L

Fig. 6

108

106 Multi-Channel Decoder

110 Multi-Channel Mixer

102 Speaker System

Fig. 7

Fig. 8

Fig. 9